(19) **Europäisches Patentamt European Patent Office Office européen des brevets**

(11) **EP 4 330 735 B1**

(12) **EUROPEAN PATENT SPECIFICATION**

(45) Date of publication and mention
of the grant of the patent:
**05.03.2025 Bulletin 2025/10**

(21) Application number: **22721822.9**

(22) Date of filing: **26.04.2022**

(51) International Patent Classification (IPC):
**G01V 7/04** (2006.01)    **G01V 7/14** (2006.01)

(52) Cooperative Patent Classification (CPC):
**G01V 7/04; G01V 7/14**

(86) International application number:
**PCT/GB2022/051048**

(87) International publication number:
**WO 2022/229621 (03.11.2022 Gazette 2022/44)**

(54) **HIGH FIDELITY ROBUST ATOM OPTICS**

ROBUSTE ATOMOPTIK MIT HOHER WIEDERGABETREUE

OPTIQUE ATOMIQUE ROBUSTE À HAUTE FIDÉLITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2021 GB 202105918**

(43) Date of publication of application:
**06.03.2024 Bulletin 2024/10**

(73) Proprietor: **The University Of Birmingham Birmingham B15 2TT (GB)**

(72) Inventors:
• **LELLOUCH, Samuel**
**Birmingham West Midlands B15 2TT (GB)**
• **HOLYNSKI, Michael**
**Birmingham West Midlands B15 2TT (GB)**
• **LANGLOIS, Mehdi**
**Birmingham West Midlands B15 2TT (GB)**

(74) Representative: **HGF**
**HGF Limited**
**1 City Walk**
**Leeds LS11 9DX (GB)**

(56) References cited:
WO-A1-2020/124134    WO-A2-2012/090134
CN-A- 107 328 355    US-A1- 2015 331 142
US-A1- 2018 073 856    US-A1- 2020 395 726
US-B1- 10 371 856

## Description

This invention relates to an apparatus for driving atoms of an atom cloud into a targeted quantum state, a method thereof, an atomic interferometer and a gravity sensor.

## BACKGROUND

Most quantum technologies rely on the coherent manipulation of atomic states, including for example, atom interferometry which is a technique used for sensing and making precise measurements of physical phenomena. In particular, atom interferometry may be used to accurately measure gravitational acceleration, the gravitational constant, the fine structure constant, and inertial effects such as rotations and accelerations, among other physical phenomena. Quantum gravity sensors generally use laser beams to coherently split, deviate and recombine atomic wave packets. This is done by tailoring the characteristics of those pulses, such as the frequency, intensity or duration of the laser beam to deliver the suited population transfers into their targeted quantum states. In particular, atom interferometers use lasers to interact with states of atoms to split the atomic wavepackets and transfer momentum to the of atoms travelling along different pathways. The separate matter wave beams are later redirected and interfered together, and the resulting interference pattern may be analysed to determine the physical phenomena. Travelling from the initial interaction to the point of interference and observation, the atoms are in quantum superposition. Unlike light, atoms are massive and bear signals from gravitation and other interactions in their interference patterns, which allows highly sensitive measurements of these phenomena to be performed. Indeed, any effect that modifies the potential energy, internal energy, or kinetic energy across the two arms of the interferometer may vary, depending on the configuration of the interferometer, and appear in the interference pattern. For example, by looking at population differences in the atoms in the states shown in the interference patterns, the effect the phenomenon has had on the atoms in the two arms of the interferometer can be revealed.

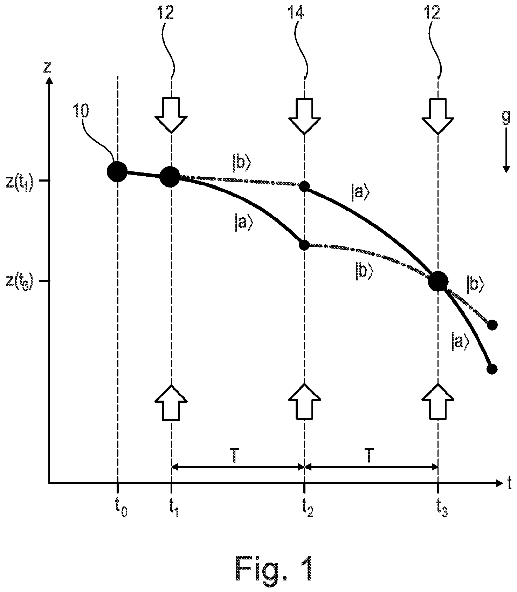

For illustrative purposes, this is shown in Fig. 1, which is a schematic illustration of atom interferometry showing an atom 10 being subjected to a plurality of light pulses 12, 14 emitted by a laser (not shown), with its quantum states being detected by a detector (not shown) of an atom interferometer. In particular, the atom 10 is subjected to alternating light pulses of $\pi$ and $\pi/2$ light pulses. The atom 10 may be provided in either its ground or excited state, and when subjected to a first $\pi/2$ light pulse 12 at a time=$t_1$, the atomic wave packet is split and deviated into quantum superposition, before being deviated when subjected to a $\pi$ light pulse 14 at time=$t_2$. A second $\pi/2$ light pulse 12 at a time=$t_3$ causes the atomic wavepacket 10 to be recombined, before being detected by two arms of the detector. The internal state atomic populations of the atom 10 give rise to an interference pattern.

Patent application publication number US2018073856A provides a disclosure related to Multidimensional Coherent Spectroscopy Using Frequency Combs. Patent application publication number US2020395726A provides a disclosure related to optical frequency manipulation. Patent application publication number CN107328355A provides a disclosure related to an integrated optical system for a cold atom interferometer.

It is in the above context that the present invention has been devised.

## BRIEF SUMMARY OF THE DISCLOSURE

In accordance with a first aspect of the present disclosure, there is provided an apparatus for driving atoms of an atom cloud into a targeted quantum state, the apparatus comprising: an atom source for releasing a cloud of atoms to be driven into a targeted quantum state; a laser system configured to generate a laser beam to be directed onto the atom cloud in use, the laser beam having a frequency corresponding to a resonant frequency of an atomic transition for exciting the atoms into the targeted quantum state; a modulator configured to, in use, modulate the frequency of the laser beam responsive to an input signal; a waveform generator coupled to the modulator and configured to, in use, generate an input signal for the modulator, wherein the input signal is arranged to cause the modulator to modulate the laser light to generate a comb of frequencies around the resonant frequency of the atomic transition, the frequency comb including a plurality of peaks, each peak being separated by a frequency spacing that is determined based on a Rabi frequency, $\Omega$, of the atomic transition to drive atoms of the atom cloud into a targeted quantum state.

By generating the laser beam with the above frequency comb based on the Rabi frequency, the laser beam is generated to have a polychromatic spectrum including a plurality of peaks with the peaks corresponding to the frequency components peaking in amplitude across the spectrum. By probing an atom cloud with a polychromatic laser beam, the fidelity of the atoms being driven into the targeted quantum state may be increased, as compared with monochromatic laser beams. Here, a monochromatic laser beam corresponds to a laser beam having a frequency spectrum defined by a single frequency that peaks in amplitude. In particular, when a monochromatic laser beam probes an atom cloud, cloud inhomogeneities such as varying atom velocities and positions within the cloud cause varying Doppler shifts and varying experienced laser intensities throughout the cloud, such that the fidelity is reduced since not all atoms will be driven into the targeted quantum state. This in turn reduces the sensitivity of the devices, since errors will arise in the measurements taken due to atoms not being in their targeted quantum state. By contrast, the above polychromatic laser beam helps to deliver pulses that are less sensitive to such cloud inhomogeneities, thereby improving the fidelity. In turn, the sensitivity of devices such as atom interferometers and quantum gravity sensors may be significantly improved, since near 100% of the atom cloud may be in the targeted quantum state, thereby reducing the risk of erroneous measurements arising due to atoms being in inconsistent quantum states. Moreover, the above polychromatic laser beams also offer many practical advantages over other prior art methods to improve the fidelity of the atoms, since the polychromatic laser beams of the present disclosure may be generated with relatively low power and short pulse durations, as compared with the prior art, which is advantageous for large momentum transfer (LMT) schemes.

The frequency spacing, $d\omega$, between each peak may be equal. In doing so, the polychromatic spectrum of the laser beam may include a plurality of equally distributed peaks, which helps to improve the fidelity.

The frequency spacing, $d\omega$, may be determined to be approximately an integer multiple of the Rabi frequency, $\Omega$, associated with each individual peak. By providing a frequency spacing approximately equal to the Rabi frequency, the pulse fidelity may be further improved.

The plurality of peaks may be even in number. The plurality of peaks may include a plurality of pairs of peaks. Each pair of peaks may correspond to two peaks that are equidistant to the centre frequency. The centre frequency may correspond to the midpoint between the lowest frequency peak and the highest frequency peak and may be resonant with the atomic frequency.

The frequency comb may include no peak at a centre frequency of the frequency comb. By providing the frequency comb without a central frequency component, this facilitates in reducing the long-term damping of the oscillations between the two atomic states, which can be useful for LMT purposes.

The peaks may have a predetermined amplitude distribution. In doing so, the frequency comb may advantageously be tailored to optimize the characteristics of the population transfers. The amplitude distribution may include a power decay between adjacent peaks, which helps to smoothly transition atoms into the targeted quantum state with high-fidelity and increased robustness against pulse duration. Alternatively, each peak may be approximately equal in amplitude, which advantageously helps to produce a high-fidelity and very rapid population transfer to the desired state.

The laser beam may be a pulsed laser beam. The pulsed laser beam may have a pulse duration of an order of $1/\Omega$ s. It will be understood that the pulse duration may be tailored according to the amplitude distribution of the peaks. The pulse duration may be determined using numerical simulations based on the predetermined amplitude distribution of the peaks. The pulsed laser beam helps to accurately drive a population of atoms into the targeted quantum state quickly and efficiently.

The laser beam may be for driving atoms into the targeted quantum state with a higher fidelity than a fidelity achieved by a monochromatic laser beam, wherein the fidelity is defined as the maximum population transfer of atoms of the atom cloud being driven into the targeted quantum state. The laser beam may be for robustly driving atoms into the targeted quantum state. The polychromatic laser beam may therefore advantageously help to robustly drive atoms into the targeted quantum state irrespective of the dynamics of each individual atom within the cloud. In doing so, this helps to remove the need for further accounting for effects affecting the dynamics of the cloud in the laser beam, such as cloud expansion, global position or Doppler shifts, tilts,, or effects related to platform motion. In doing so, the claimed laser beam provides a cost-effective and efficient means of improving the sensitivity of devices probing atom clouds, by improving the fidelity achieved by the laser beam.

The laser beam may be for driving atoms from the ground state into the excited state. The laser beam may be for driving atoms from the excited state into the ground state. Atoms may therefore advantageously be driven into both the excited and ground states with high fidelity.

The atoms may be arranged to be in the excited state, prior to being probed by the laser beam. The laser beam may be for driving the atoms, arranged in the excited state prior to being probed by the laser beam, into the targeted quantum state with a lower rate of spontaneous emission than a rate of spontaneous emission produced by a monochromatic laser beam. Advantageously, when used on atoms initially prepared in the excited state, the above described polychromatic laser beam may do so not only with high fidelity, but also by suppressing the rate of spontaneous emission of the atoms. In doing so, this beneficially improves how coherently atoms can be manipulated, particularly for long LMT pulse sequences. Spontaneous emission is an undesirable source of decoherence when manipulating atomic internal states, and therefore ultimately limits the timescales over which coherent state manipulation can be performed. By probing an atom initially prepared in the excited state with the above-described polychromatic laser beam, the atom may spend very little time in the excited state. This gives rise to a slower decay of atomic oscillations over time as compared with when a monochromatic laser beam probes the same atoms. Thus, by suppressing spontaneous emission, the sensitivity of atom-based quantum devices may be improved. Moreover, long LMT sequences in the context of atomic interferometry may be achieved, since large populations of atoms may be successfully alternated between the ground and excited states over long sequences of pulses.

The modulator may comprise an acousto-optical modulator, AOM. The waveform generator may comprise an arbitrary waveform generator, AWG, configured to output a radio frequency, RF, signal for determining the frequency modulation of the modulator. The apparatus may further comprise a spectrum analyser. The apparatus may therefore be cost-effective.

The cloud of atoms may be cooled before being probed with the laser beam. By probing a cooled atom cloud with the laser beam, the laser beam may efficiently drive the atoms into the targeted quantum state with high fidelity.

The atom cloud may be driven by the laser beam in a non-cavity environment. As such, the apparatus is not confined to use in a cavity environment.

The laser beam may be generated to have a power equal to or less than 1 W. In doing so, the power required to operate the apparatus in use is significantly less than known techniques that use flat or large laser beams.

A single laser pulse may be configured to drive the atoms into the targeted quantum state. The laser pulse may be configured to have a pulse duration of an order of $1/\Omega$ s. Since the pulse durations are approximately the same as those used for monochromatic laser beams, the polychromatic laser beams may be usable in large momentum transfer schemes, by contrast to known composite pulses, which include a sequence of pulses with different pulse durations.

The atom source may comprise a cloud of Rubidium 87 atoms. The frequency spacing, $d\omega$, may be of the order of 100 kHz. The pulse duration may be of the order of $10^{-6}$ s, and preferably in the range of $4\times10^{-6}$ s to $6\times10^{-6}$ s. The laser beam may be for driving atoms into the targeted quantum state with a fidelity equal to or greater than 0.8, and preferably equal to or greater than 0.95.

The atom source may comprise a cloud of Strontium 87 atoms. The laser beam may be for driving an atomic transition at 689 nm. The frequency spacing, $\delta w$, may be of an order of magnitude of 100 kHz. The pulse duration may be of an order of $10^{-6}$ s. Alternatively, the laser beam may be for driving an atomic transition at 698 nm. The frequency spacing, $\delta\omega$, may be of an order of magnitude of 1kHz. The pulse duration may be of an order of $100 \times 10^{-6}$ s. It will however be understood that the apparatus may be adapted to any atomic species and have the frequency spacing and pulse duration tailored based on the Rabi frequency of the atomic transition of the atomic species being probed.

The frequency spacing, $d\omega$, may be less than 1 MHz.

According to a second aspect of the disclosure, there is provided an atomic interferometer comprising an apparatus described herein.

According to a third aspect of the disclosure, there is provided a gravity sensor comprising an apparatus described herein.

According to a fourth aspect of the disclosure, there is provided a method for driving atoms of an atom cloud into a targeted quantum state, the method comprising: generating a laser beam to be directed onto an atom cloud to be driven into a targeted quantum state, the laser beam having a frequency corresponding to a resonant frequency of an atomic transition for exciting the atoms into the targeted quantum state; directing the laser beam through a modulator configured to modulate the frequency of the laser beam responsive to an input signal; generating an input signal input into the modulator to cause the modulator to modulate the laser light to generate a comb of frequencies around the resonant frequency of the atomic transition, the frequency comb including a plurality of peaks, each peak being separated by a frequency spacing that is determined based on a Rabi frequency of the atomic transition; and probing an atom cloud with the modulated laser beam for driving atoms of the atom cloud into a targeted quantum state.

The method may further comprise, prior to generating the input signal, determining the frequency spacing of the frequency comb to be generated. The frequency spacing may be determined based on a Rabi frequency of the atomic transition.

The method may further comprise, prior to generating the input signal, determining an amplitude distribution for the plurality of peaks. The input signal may be generated based on the determined amplitude distribution.

The method may further comprise, by probing the atom cloud, driving the atom cloud into the targeted quantum state with a higher fidelity than a fidelity achieved by a monochromatic laser beam, wherein the fidelity is defined as the maximum population transfer of atoms of the atom cloud being driven into the targeted quantum state.

The method may further comprise, by probing the atom cloud, driving the atom cloud from the ground state into the excited state. The method may further comprise, by probing the atom cloud, driving the atom cloud from the excited state into the ground state.

The method may further comprise, prior to probing the atom cloud, providing the atoms in the excited state. The method may further comprise, by probing the atom cloud, driving the atom cloud into the targeted quantum state with a lower rate of spontaneous emission than a rate of spontaneous emission produced by a monochromatic laser beam.

The method may further comprise, prior to probing the atom cloud, cooling the atom cloud.

## BRIEF DESCRIPTION OF THE DRAWINGS

Examples of the disclosure are further described hereinafter with reference to the accompanying drawings, in which:

Figure 1 is a schematic illustration of atoms undergoing atomic interferometry of the prior art;

Figure 2 is a schematic illustration of an apparatus according to a first example of the disclosure;

Figure 3a models the fidelity achieved by a standard monochromatic laser beam and two polychromatic laser beams produced by the apparatus of Fig. 2, whereby the atom cloud does not exhibit spontaneous emission and the polychromatic laser beam spectrum has an equal amplitude distribution and includes a central field peak;

Figure 3b models the fidelity achieved by a standard monochromatic laser beam and polychromatic laser beams produced by the apparatus of Fig. 2, whereby the atom cloud does not exhibit spontaneous emission and the polychromatic laser beam spectrum has an equal amplitude distribution and does not include a central field peak;

Figure 3c models the fidelity achieved by a standard monochromatic laser beam and polychromatic laser beams produced by the apparatus of Fig. 2, whereby the atom cloud does not exhibit spontaneous emission and the polychromatic laser beam spectrum has a tailored amplitude distribution following a geometric decay, and does not include a central field peak;

Figure 3d models the fidelity achieved by a standard monochromatic laser beam and polychromatic laser beams produced by the apparatus of Fig. 2, whereby the atom cloud exhibits spontaneous emission and the polychromatic laser beam spectrum has an equal amplitude distribution and includes a central field peak;

Figure 3e models the fidelity achieved by a standard monochromatic laser beam and polychromatic laser beams produced by the apparatus of Fig. 2, whereby the atom cloud exhibits spontaneous emission and the polychromatic laser beam spectrum has an equal amplitude distribution and does not include a central field peak;

Figure 3f models the fidelity achieved by a standard monochromatic laser beam and polychromatic laser beams produced by the apparatus of Fig. 2, whereby the atom cloud exhibits spontaneous emission and the polychromatic laser beam spectrum has a tailored amplitude distribution following a geometric decay, and does not include a central field peak;

Figure 4 models the fidelity as a function of a frequency spacing achieved by three polychromatic laser beams having different beam widths, each laser beam having been produced by the apparatus of Fig. 2;

Figure 5a models the dynamics of a two-level atom initially prepared in the excited state in the presence of spontaneous emission as probed by a monochromatic laser beam;

Figure 5b models the dynamics of a two-level atom initially prepared in the excited state in the presence of spontaneous emission as probed by a polychromatic laser beam according to a second example of the disclosure; and

Figure 6 is a first method according to the present disclosure.

## DETAILED DESCRIPTION

The present inventors have realised that there is room for improving the fidelity of atoms being probed by laser beams, so that atoms may be coherently manipulated accurately. Qualitatively, the fidelity is defined as the maximum population transfer into the targeted quantum state (a mathematical definition is given in context below). It will be understood that it is important to address an atom cloud with near 100% fidelity so that atoms are in their intended quantum state, in order to reduce errors when probing the atom cloud with an atomic interferometer, gravity sensor or the like. Indeed, fringe contrast, and ultimately sensor sensitivity, are bounded by how the atoms interact with the laser beams. Generally speaking, when being probed by standard laser beams, the atoms in an atom cloud do not achieve high fidelity, due to internal cloud dynamics. In particular, inhomogeneities arise between individual atoms, as a result of varying velocities and positional dispersions within the cloud.

The inventors have particularly realised that it is important to enhance atom interferometry performance by improving the fidelity achieved, particularly for large-momentum transfer (LMT) interferometry, which involves injecting a large number of sequential laser beam pulses into an atom cloud and requires the fidelity to be maintained at ~100% (i.e. that ~100% of the atoms are driven into the targeted quantum state) in order to have a non-zero contrast at the output, regardless of long interferometric sequences, which may result in significant cloud expansion, accumulated Doppler shifts, misalignment-induced drifts, and/or spontaneous emission.

However, whilst a laser beam may be able to reliably drive a single atom into its targeted quantum state, this is not the case for a cloud of atoms. Taking a generic case of a single two-level atom being driven from its ground state $|g>$ into its excited state $|e>$ by a laser beam having a polychromatic field made of N frequency components at **frequencies** $\omega_i$ with a central laser frequency $\omega_L$, and $\omega_i = \omega_L + \delta\omega_i$, the dynamics of the two-level atom is approximated to be:

$$i\partial_t \begin{pmatrix} c_g \\ c_e \end{pmatrix} = \begin{pmatrix} 0 & \Omega(t)/2, \\ \Omega^*(t)/2 & \delta \end{pmatrix} \begin{pmatrix} c_g \\ c_e \end{pmatrix}$$

Equation 1

with

$$\Omega(t) = \sum_{i=0}^{n} \Omega_i e^{i(\delta\omega_i t + \phi_i)}$$

Equation 2

where $\Omega_i$ is the Rabi frequency of the $i$ - $th$ frequency component, $\phi_i$ is its phase, and $\delta\omega_i = \omega_{at} - \omega_L$ where $\omega_{at}$ is the atomic frequency. The coefficients $c_e(t)$, $c_g(t)$ which parametrise the atomic wavefunction in the basis $|e>$, $|g>$ fulfil the normalization condition $|c_e|^2 + |c_g|^2 = 1$. It will be understood that although the exact expression of $\Omega_i$ depends on the details of the considered transition, Equation 1 is very general in nature and describes any linear interaction between a two-level atom and an electric field.

It will be understood that Equation 1 describes a coherent evolution without losses. In the presence of spontaneous emission, the dynamics is captured by the optical Bloch equations (OBE), which take here the following form:

$$i\partial_t \rho_{eg} = -\left(i\frac{\Gamma}{2} + \delta\right)\rho_{eg} - \Omega(t)\left(\rho_{ee} - \frac{1}{2}\right)$$

$$i\partial_t \rho_{ee} = -i\Gamma\rho_{ee} - 2iIm\big[\Omega(t)\rho_{eg}\big]$$

Equation 3

where $1/\Gamma$ is the lifetime of the excited state. Both Equations 1 and 3 can be numerically solved with some specified initial conditions.

In most situations however, light pulses do not operate on single atoms but on atom clouds, which exhibit both spatial and velocity dispersions. On the one hand, atoms at different spatial positions in the laser beam see different intensities I(r), and thus Rabi frequencies. This amounts to add a position dependence in Equation 2, $\Omega_i \rightarrow \Omega_{i,r}$. On the other hand, atoms with different velocities see different laser frequencies due to the Doppler effect; for an atom of velocity v, each frequency $\omega_i$ of the driving field will be Doppler-shifted by $k_i \cdot v$ (with $k_i$ the corresponding wavevector).

The pulse fidelity is quantitively therefore defined as the cloud-averaged excited-state probability

$$F = < P_e(t) > = \int_v \int_r f(r)f_v(v)P_e[t, r, v]d^3v d^3r$$

Equation 4

where $f(r)$ is the cloud spatial distribution, $f_v(v)$ is its velocity distribution, and $P_e[t, r, v]$ is the excited state probability of an atom at position r and velocity v, as obtained by solving Equations 1 to 3 with substitutions $\Omega_i \rightarrow \Omega_{i,r}$ and $\delta \rightarrow \delta - k \cdot v$.

For standard monochromatic pulses, cloud averaging results in a loss of contrast and damping of Rabi oscillations due to dephasings between individual atom dynamics.

Accordingly, when using standard techniques, the light intensity and frequency that each atom sees locally will vary based on their own individual velocity, position, etc. which results in varying Doppler shifts, thereby leading to the atoms being at different quantum states. The inventors have therefore realised that there is a real need for robustly addressing an entire atom cloud with high fidelity, regardless of the internal dynamics of the cloud. Furthermore, such issues are important in addressing the use in applications, particularly those requiring operation on moving platforms. Indeed, this problem is prevalent to all cold-atom based experiments or technologies which rely on the coherent manipulation of atom clouds which have a finite size/temperature, for instance, in atom interferometry and quantum sensing and would be particularly important for reliably performing LMT interferometry.

Whilst the problem has been realised in the wider industry, standard techniques involve circumventing this issue by trying to reduce the effects of cloud inhomogeneities by working in appropriate regimes of operation. For example, one such technique is to work with large or flat beams, but this requires a significant amount of laser power. Another such technique is to work at low temperatures or resort to initial velocity selection, but generally speaking, this technique requires expensive and energy consuming cooling techniques and/or an atom cloud with an insufficient atom number. Yet another technique is to use composite laser pulses that are tailored to be resilient to cloud inhomogeneities. However, this technique suffers from very long pulse durations or corresponding increases in laser power and cost, which makes it difficult to use in practice in LMT schemes, or in the presence of spontaneous emission. The inventors have therefore realised a need for improving the fidelity that a laser beam can achieve for coherent manipulation of atoms.

Furthermore, when a two-level atom is in the excited state, spontaneous emission causes the atom to decay decoherently. This ultimately bounds the sensitivity of quantum-based devices, given that atoms may only be coherently manipulated when they are in their targeted quantum state. In particular, spontaneous emission causes decoherence, which is particularly limiting for the sensitivity of LMT schemes, which typically require high fringe contrast over long sequence durations. Typically, techniques to suppress spontaneous emission involve using very short pulses, but this requires increases in laser power and cost. Other prior art techniques working on two-photon transitions also face significant challenges in their sensitivity, such as the noise arising from the laser phases and propagation delays. The inventors have realised there is a need for suppressing spontaneous emission for coherent manipulation of atoms.

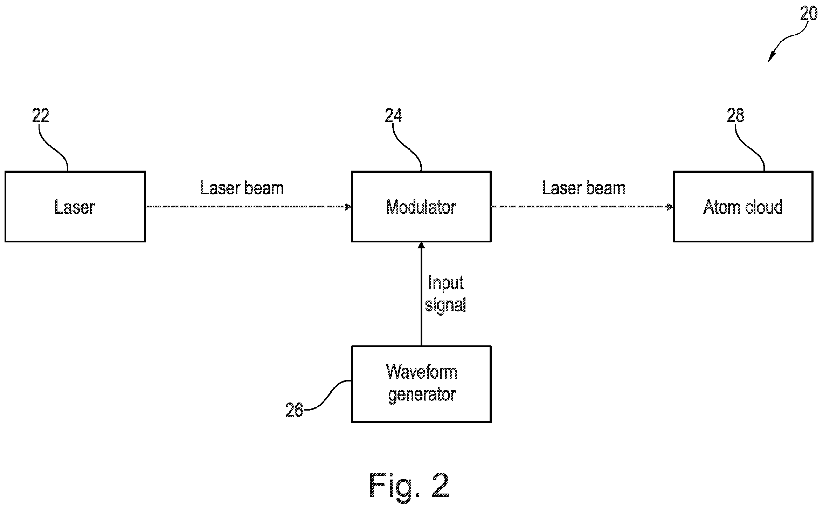

Fig. 2 is a schematic illustration of an apparatus 20 for driving atoms of an atom cloud into a targeted quantum state, according to a first example of the disclosure. The apparatus 20 includes a laser system 22, a modulator 24, a waveform generator 26 and an atom source.

The laser system 22 may comprise any suitable laser for generating a laser beam. In Fig. 2, the laser beam is denoted by a dashed line. The laser beam generated by the laser system 22 is used to probe an atom cloud 28 which is released from the atom source. Interposed between the laser system 22 and the atom cloud 28 is the modulator 24 which the laser beam is fed through before being directed into the atom cloud. The modulator 24 may be of any suitable type, such as an acousto-optic modulator (AOM), which is configured to modulate the frequency of the laser beam. In particular, the modulator 24 is in electronic communication with the waveform generator 26, from which the modulator 24 receives an input signal based upon which the modulation is performed. Specifically, in response to the input signal, the modulator 24 is arranged to modulate the laser beam to have a frequency comb around the resonant frequency of the atomic transition of the atoms being probed, whereby the frequency comb includes a plurality of peaks, with each peak being separated by a frequency spacing that is determined based on the Rabi frequency of the atomic transition to drive the atoms of the atom cloud into the targeted quantum state. The peaks are frequency components that peak in amplitude in comparison to the other frequencies making up the laser beam spectrum. In doing so, the frequency comb may be considered to exhibit a polychromatic frequency spectrum. It will be understood that the input signal is determined according to the chemical composition of the atom cloud. This will be discussed in further detail below.

The laser system may comprise a seed laser, an amplifier and a harmonic generator. The seed laser is for generating a laser beam, which is output and injected into the amplifier which amplifies the laser beam signal. The amplifier may be an optical amplifier. By seeding the laser beam in this manner, variations in the output energy may be smoothed out, whilst producing high output power, which may be particularly beneficial for performing atom interferometry, particularly for laser pulses. The laser beam having traversed through the amplifier is next input into the harmonic generator, which may be a second harmonic generator or any suitable generator for performing frequency multiplication.

In some examples of the disclosure, the apparatus 20 further includes a spectrum analyser (not shown) arranged to detect the spectra exhibited by the atom cloud, from which the atomic states of the atoms may be determined. The spectrum analyser may be arranged to also determine the atomic states, although this may be performed by an external computer in other example of the disclosure. Accordingly, the results as to whether the atoms of the atom cloud have been driven into the targeted quantum state may be established.

The waveform generator 26 in the first example of the disclosure is an arbitrary waveform generator (AWG) that is configured to produce a radio frequency (RF) signal that sets how the modulator 24 performs frequency modulation on the laser beam. However, the disclosure is not limited to the waveform generator 26 being an AWG, but may be any suitable type configured to generate the input signal for the modulator 24, and similarly, is not limited to the input signal being of an RF type, but may take on any form that can be received by the AOM 24. In some examples of the disclosure, the apparatus 20 further includes at least one attenuator and amplifier through which the signal output by the waveform generator 26 passes before being received by the AOM 24.

The waveform generator 26 of Fig. 2 facilitates in efficiently generating the signal for performing frequency modulation by the modulator 24 which will now be discussed. In the first example of the disclosure, the frequency comb is generated using the waveform generator to include a plurality of equally spaced peaks, such that the frequency spacing between each peak is equal.

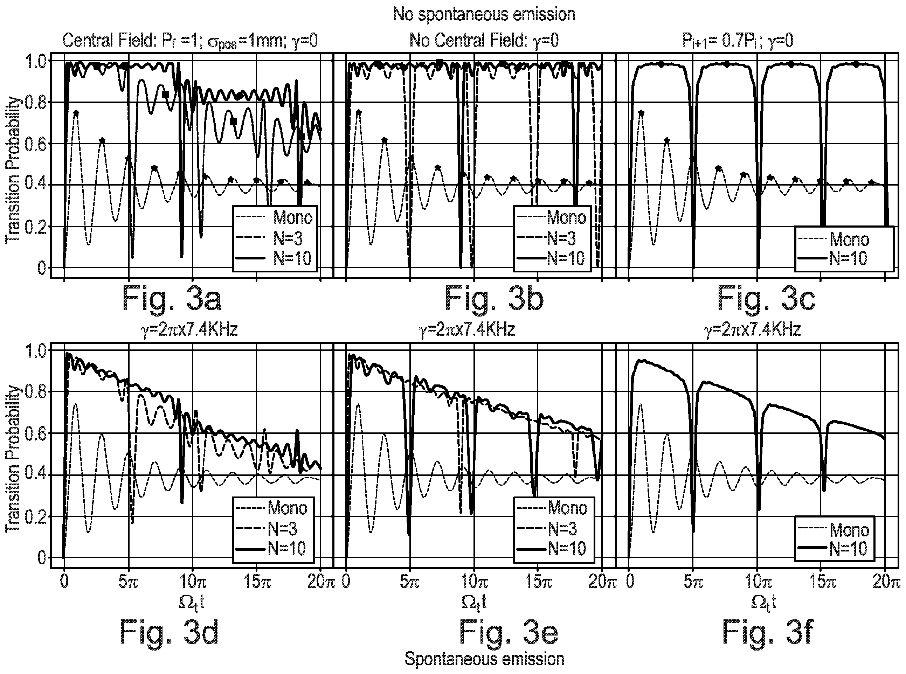

As discussed above, the polychromatic frequency spectrum includes a plurality of peaks, which peak in amplitude. Figs. 3a to 3f model the fidelity response of a cloud of Strontium 87 atoms on the 689nm transition having a cloud width of 1 mm to three different laser beams to a standard monochromatic of the prior art denoted by the dotted blue line "mono", a first pulsed polychromatic laser beam including 3 pairs of peaks as generated by the apparatus according to the first example of the disclosure as denoted by the orange line "N=3", and a second pulsed polychromatic laser beam including 10 pairs of peaks as generated by the apparatus according to the first example of the disclosure as denoted by the green line "N=10". Here, a "pair of peaks" corresponds to two peaks that are equidistant to the centre frequency of the frequency comb. The centre frequency may be the midpoint between the lowest frequency peak and the highest frequency peak across the frequency comb. The polychromatic laser beams are generated to be aligned along the z-axis with a Gaussian spatial intensity distribution in the (x,y) plane: $I(r) = I_0 exp^{-(x^2+y^2)/2\sigma_L^2}$. Introducing the Rabi frequency associated with the intensity at the centre of the beam, $\Omega_0 = d/\hbar\sqrt{2I_0/c\,\epsilon_0}$, leads to individual Rabi frequencies $\Omega_{i,r} = \Omega_{i,0}exp^{-(x^2+y^2)/4\sigma_L^2}$ with the normalisation $\sum_i \Omega_{i,0}^2 = \Omega_0^2$. The spectra are also generated with a constant power ratio P between two adjacent pairs of peaks, $P = \Omega_{i+1,0}^2/\Omega_{i,0}^2$. All field components are also assumed to be in phase $\phi_i = 0$. The parameters for the fidelity responses in the examples shown in Figs. 3a to 3f are as follows: the temperature is 1 mK, the total laser power is 100 mW and the cloud-to-beam width ratio is $\sigma_{pos}/\sigma_{beam} = 0.2$. Cloud averaging is therefore not negligible and results in a damping of monochromatic Rabi oscillations with a fidelity clearly below 1 (about 0.75 at its maximum). The comb spacing for the pulsed polychromatic laser beams have been set to be equal to the Rabi frequency of the most central component $\delta\omega = \Omega_{1,0}$. Given that the cloud of atoms is a cloud of Strontium 87 atoms on the 689nm transition, the polychromatic laser beams have a frequency spacing, $d\omega$, is of the order of 100 kHz, and the pulse duration is of the order of $10^{-6}$ s, and preferably in the range of $4\times10^{-6}$ s to $6\times10^{-6}$ s. Figs. 3a to 3c do not exhibit spontaneous emission, whereas Figs. 3d to 3f are modelled in the presence of spontaneous emission. Figs. 3a and 3d are modelled to have a frequency comb including a central field peak (i.e. a peak at the centre frequency) around which the pairs of peaks surround, whereas Figs. 3b and 3e are modelled in the absence of a central field peak (i.e. no peak at the centre frequency). Figs. 3c and 3f include a power decay between adjacent peaks, with the power for each peak corresponding to 0.7 times the power of the preceding peak. It will of course be understood that these parameters are provided for illustration only, and are specific to these results without limiting the disclosure.

As shown in Figs. 3a to 3f, the fidelity that is observed with polychromatic pulses according to the present disclosure is higher than the fidelity achieved with monochromatic pulses (0.75). In particular, the fidelity achieved by the polychromatic light pulses is equal to or greater than 0.95. As shown in Figs. 3a to 3c, in the absence of spontaneous emission, setting the frequency comb to include pairs of peaks gives rise to plateaus in which the atoms remain in the excited state before dropping to the ground state at specific times. The sharp transition to the excited state arises from the presence of highly detuned peaks. Detuned peaks here means having a spectrum with peaks arranged across the spectrum, including not only around a centre but also toward the edges of the frequency comb. By providing peaks near the edges of the comb, this effectively means that all atoms within the cloud may be addressed with high fidelity, thereby removing the need for further accounting for effects affecting the dynamics of the cloud in the laser beam. Accordingly, the polychromatic laser beam of the present disclosure can give rise to improved fidelity more quickly than using standard practices. Moreover, the atoms plateau and stay in the excited state. Due to the polychromatic comb structure of the laser beams, the atoms are less sensitive to Doppler-induced frequency shifts, despite the cloud having a finite size and temperature. Additionally, the plateaus exhibited reduce the dephasings due to Rabi frequency inhomogeneities within the cloud. Furthermore, as illustrated by Figs. 3a to 3f, the more peaks introduced into the frequency spectrum, the smoother and longer the plateaus in which the atoms stay in the excited state. As shown in Figs. 3b and 3e, in the absence of a central field peak, long term damping may be suppressed, which beneficially helps to maintain high fidelity with atoms in the excited state over several Rabi cycles and is therefore especially beneficial for LMT schemes, which involve injecting a plurality of consecutive pulses into a cloud. As shown in Figs. 3c and 3f, when a power decay is also introduced between adjacent peaks, the plateaus are smoothened, with the fidelity fluctuations reduced. Accordingly, the fidelity can be improved significantly even when the power is reduced.

In the first example of the disclosure, the waveform generator is configured to generate the input signal to tailor the amplitude distribution of the peaks. In particular, the frequency comb is generated, such that there is a power decay between adjacent peaks. However, the amplitude distribution of the peaks is not limited to this, and in other examples of the disclosure, the frequency comb is generated such that each peak is equal in amplitude.

The polychromatic laser beam has a pulse duration based on the Rabi frequency $\Omega$. In the first example of the present disclosure, the pulse duration approximates to $1/\Omega_{0,0}$ s. Accordingly, the pulse durations do not need to be long to achieve the benefits of high fidelity very rapidly, and are typically much shorter as compared with standard techniques, such as composite-type pulses. The amount of energy required is therefore drastically reduced to achieve high fidelity. However, in some examples of the disclosure, the pulse duration is predetermined according to the amplitude distribution of the peaks, for example by using computer simulations based on the frequency comb.

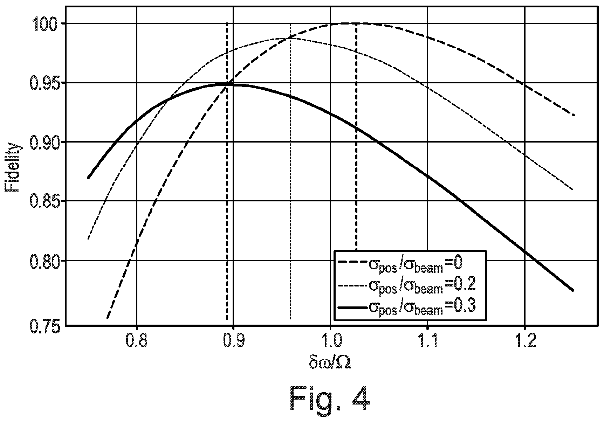

As discussed above, the frequency spacing $\delta\omega$ separating each peak from its adjacent peak is determined based on the Rabi frequency $\Omega$ of the atomic transition. In particular, it is preferable that the frequency spacing $\delta\omega$ is approximately equal to the Rabi frequency $\Omega$, such that a ratio $\delta\omega/\Omega$ of the frequency spacing to the Rabi frequency is in the range of 0.5 to 1.3 and more preferably approximates to 1. By approximating the ratio $\delta\omega/\Omega$ to equal 1, the fidelity achieved may be improved. This is illustrated by Fig. 4, which shows the fidelity response of the atom cloud to a polychromatic pulse as a function of the ratio $\delta\omega/\Omega$, whereby the polychromatic pulse has been generated according to the first example of the disclosure and has the same parameters as in Fig. 3a (having ten pairs of peaks including a central frequency component and modelled in the absence of spontaneous emission). Fig. 4 particularly shows how the pulse fidelity is affected when varying the ratio $\delta\omega/\Omega$ around 1, for three laser beams having different values of the cloud-to-beam width ratio, $\sigma_{pos}/\sigma_{beam}$. As shown in Fig. 4, the pulse fidelity for each laser beam is highest when the ratio $\delta\omega/\Omega$ is close to 1. For example, as shown in Fig. 4, for the laser beam having $\sigma_{pos}/\sigma_{beam}= 0$, the ratio $\delta\omega/\Omega$ between 0.9-1.2 produces a fidelity equal to or greater than 0.95. For the laser beam having $\sigma_{pos}/\sigma_{beam}= 0.2$, the ratio $\delta\omega/\Omega$ between 0.84-1.09 produces a fidelity equal to or greater than 0.95, and the ratio $\delta\omega/\Omega$ between 0.8-1.18 produces a fidelity equal to or greater than 0.9. For the laser beam having $\sigma_{pos}/\sigma_{beam}= 0.3$, the ratio $\delta\omega/\Omega$ between 0.77-1.05 produces a fidelity equal to or greater than 0.9. However, even though the fidelity decreases as the ratio $\delta\omega/\Omega$ departs from 1, the fidelity remains higher than when a standard monochromatic pulse of the prior art is used, which as can be seen from Fig. 3a only achieves a fidelity of 0.75. Accordingly, generating the polychromatic laser beam according to the first example of the disclosure improves the fidelity over the monochromatic pulse even when the frequency spacing $\delta\omega$ is not exactly equal to the Rabi frequency $\Omega$. However, the disclosure is not limited to this, and in other examples of the disclosure, the frequency spacing $\delta\omega$ approximates to an integer multiple of the Rabi frequency $\Omega$ of the atomic transition.

It will also be understood that the parameters and results shown in Figs. 3a to 4 are specific to the parameters used, and that under different experimental parameters for different atomic compositions, different specific fidelity values would be achieved, although setting the frequency spacing $\delta\omega$ to approximately equal or an integer of the Rabi frequency gives rise to the highest fidelity readings attained by the polychromatic laser beam according to the present disclosure. Furthermore, whilst the polychromatic laser beams in the example of Figs. 3a to 3f include 10 pairs of peaks, the disclosure is not limited to this, and the frequency comb may be generated to include any number of peaks that are two or more peaks having a frequency spacing based on the Rabi frequency of the atomic transition.

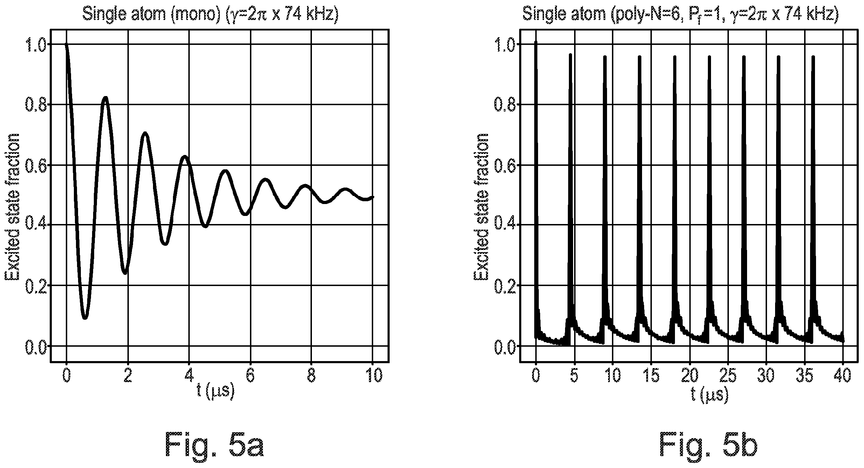

The laser beam of the present disclosure has a further advantageous effect of suppressing spontaneous emission when applied to a two-level atom initially prepared in the excited state. As discussed above, spontaneous emission causes atoms to be decoherently lost from the excited state, which is a problem for the purposes of maintaining a strong fringe contrast. Advantageously however, the polychromatic laser beam helps to reduce the rate of spontaneous emission when applied to atoms initially prepared in the excited state, as compared with prior art techniques, and is particularly illustrated in Figs. 5a-b, which model the quantum dynamics of a two-level atom transferring between its ground state and excited state as a function of time, where the atom, prior to being probed by the laser beam, was in the excited state. In particular, Fig. 5a models the atom when being probed by a monochromatic laser beam of the prior art. Fig. 5b models the atom when being probed by a polychromatic laser beam according to the present disclosure, which has a frequency comb based on the Rabi frequency including six pairs of peaks, no central field peak and a tailored amplitude distribution. As shown in Fig. 5a, the monochromatic laser beam fails to significantly reduce the rate of spontaneous emission, which leads to decoherence. This is illustrated in Fig. 5a, with the atomic oscillations between the excited and ground states rapidly decaying, so that the atom spends ~50% of the time in the excited state and ~50% of the time in the ground state. By contrast, Fig. 5b shows that the polychromatic laser beam helps to successfully suppress spontaneous emission, since the amount of time with which the atom occupies the excited state is significantly reduced. Indeed, it can clearly be seen that after nine consecutive pulses, the polychromatic laser beam successfully drives the atom into the ground state with high probability, and over a period of 40 $\mu$s, the atom only spends a matter of nano-seconds intermittently in the excited state. Since the oscillations between the ground state and the excited state decay far more slowly using the polychromatic laser beam than the monochromatic laser beam, the resulting fringe contrast may be improved, thereby leading to greater sensitivity, which is particularly beneficial for devices using long pulse duration sequences, such as in LMT schemes.

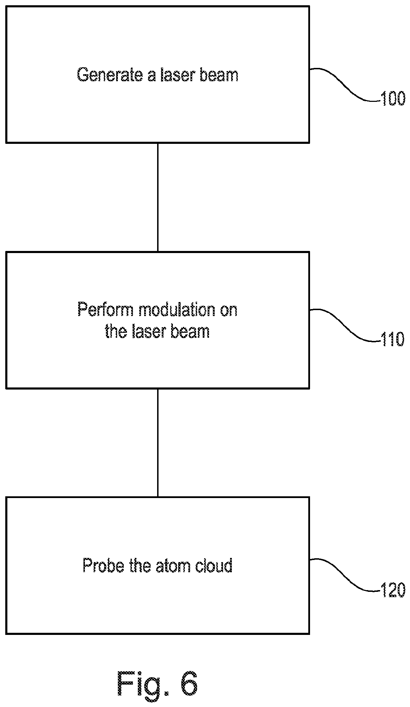

Fig. 6 shows a first example of a method, which may be used in accordance with the apparatus of Fig. 2 to produce the polychromatic results shown in Figs. 3a to 4. The first method includes a first step 100 of generating a laser beam, which is for driving an atom cloud into a targeted quantum state. The laser 22 of Fig. 2 may be used to generate the laser beam. The first method next includes a second step 110 of performing modulation on the laser beam, by directing the laser beam through a modulator configured to perform frequency modulation on the laser beam. The modulator 24 of Fig. 2 may be used to perform the modulation. In order to perform the modulation, an input signal to drive the modulator is generated. The waveform generator 26 of Fig. 2 may be used to generate the input signal to drive the modulation. In particular, the modulator is arranged to perform the frequency modulation based on the input signal to cause the laser beam to include a comb of frequencies around the resonant frequency of the atomic transition of the atoms in the atom cloud. The frequency comb is generated to include a plurality of peaks which are separated by a frequency spacing that is determined based on the Rabi frequency of the atomic transition. As discussed above in relation to Fig. 2, modulating the laser beam in this manner gives rise to a polychromatic spectrum based on the Rabi frequency. In the first method, prior to generating the input signal, a step (not shown) of determining the frequency spacing to be generated is performed. In the first example of the method, the determination of the frequency spacing includes referring to a database that sets out values for the Rabi frequency of a plurality of elements. Based on the composition of the atom cloud to be probed by the laser beam, the determination involves looking up the relevant element to identify the Rabi frequency $\Omega$ of the atoms, and setting the frequency spacing $\delta\omega$ to approximate to the Rabi frequency $\Omega$. However, the disclosure is not limited to this, and in other examples of the disclosure, a user may identify the Rabi frequency of the atomic transition, and set the frequency spacing $\delta\omega$ for example by inputting the value into an input unit of the waveform generator. The first method further includes a third step 120 of probing the atom cloud with the modulated laser beam, which includes the polychromatic frequency comb. In the first method, the atom cloud is prepared before being probed, by using standard cooling techniques. In doing so, the probed atoms can be driven into the targeted quantum state with high fidelity.

In some examples of the disclosure, the apparatus is implemented as a gravity sensor or an atomic interferometer. The disclosure however is not limited to these implementations, and the apparatus may be used in any device for performing high fidelity atom optics.

In further examples of the disclosure, the method includes a step of preparing the atoms in the excited state prior to being probed by the laser beam. The atoms may be provided in the excited state using any suitable means. In doing so, when the laser beam probes the atoms, the atoms may be driven into the targeted quantum state, not only with high fidelity but also whilst suppressing spontaneous emission, which is particularly advantageous for long sequence LMT schemes.

Whilst the disclosure has been described in use with a cloud of Strontium 87 atoms on the 689 nm transition, it will be understood that the disclosure may be adapted to any atomic species. For example, polychromatic laser beams may be used to probe a cloud of Rubidium 87 atoms, whereby the frequency spacing is based on the Rabi frequency driving the Rubidium 87 atomic transition. In particular, when driving the Rb 87 transition, the frequency spacing, $\delta\omega$, may be of an order of magnitude of 100 kHz, and the pulse duration may be of an order of $10^{-6}$ s. When driving the Sr 87 atomic transition at 698 nm, the frequency spacing, $\delta\omega$, may be of an order of magnitude of 1 kHz and the pulse duration may be of an order of $100 \times 10^{-6}$ s.

There is provided an apparatus (20) for driving atoms of an atom cloud (28) into a targeted quantum state, the apparatus (20) comprising: an atom source for releasing a cloud of atoms (28) to be driven into a targeted quantum state; a laser system (22) configured to generate a laser beam to be directed onto the atom cloud (28) in use, the laser beam having a frequency corresponding to a resonant frequency of an atomic transition for exciting the atoms into the targeted quantum state; a modulator (24) configured to, in use, modulate the frequency of the laser beam responsive to an input signal; a waveform generator (26) coupled to the modulator (24) and configured to, in use, generate an input signal for the modulator (24), wherein the input signal is arranged to cause the modulator (24) to modulate the laser light to generate a comb of frequencies around the resonant frequency of the atomic transition, the frequency comb including a plurality of peaks, each peak being separated by a frequency spacing, $\delta\omega$, that is determined based on a Rabi frequency, $\Omega$, of the atomic transition to drive atoms of the atom cloud (28) into a targeted quantum state.

There is provided a method for driving atoms of an atom cloud into a targeted quantum state, the method comprising: generating (100) a laser beam to be directed onto an atom cloud to be driven into a targeted quantum state, the laser beam having a frequency corresponding to a resonant frequency of an atomic transition for exciting the atoms into the targeted quantum state; directing the laser beam through a modulator configured to modulate the frequency of the laser beam responsive to an input signal; generating an input signal input into the modulator to cause the modulator to modulate (110) the laser light to generate a comb of frequencies around the resonant frequency of the atomic transition, the frequency comb including a plurality of peaks, each peak being separated by a frequency spacing that is determined based on a Rabi frequency of the atomic transition; and probing (120) an atom cloud with the modulated laser beam for driving atoms of the atom cloud into a targeted quantum state.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating a plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

The invention is defined by the appended claims.

The reader's attention is directed to all papers and documents which are filed concurrently with or previous to this specification in connection with this application and which are open to public inspection with this specification.

**Claims**

1. Apparatus (20) for driving atoms of an atom cloud (28) into a targeted quantum state, the apparatus (20) comprising:

    an atom source for releasing a cloud of atoms (28) to be driven into a targeted quantum state;
    a laser system (22) configured to generate a laser beam to be directed onto the atom cloud (28) in use, the laser beam having a frequency corresponding to a resonant frequency of an atomic transition for exciting the atoms into the targeted quantum state;
    a modulator (24) configured to, in use, modulate the frequency of the laser beam responsive to an input signal;
    a waveform generator (26) coupled to the modulator (24) and configured to, in use, generate an input signal for the modulator (24), wherein the input signal is arranged to cause the modulator (24) to modulate the laser light to generate a comb of frequencies around the resonant frequency of the atomic transition, the frequency comb including a plurality of peaks, **characterised by** each peak being separated by a frequency spacing, $\delta\omega$, that is determined based on a Rabi frequency, $\Omega$, of the atomic transition to drive atoms of the atom cloud (28) into a targeted quantum state.

2. The apparatus (20) of claim 1, wherein the frequency spacing, $\delta\omega$, is determined to be approximately an integer multiple of the Rabi frequency, $\Omega$, associated with each individual peak.

3. The apparatus (20) of claim 1 or claim 2, wherein the plurality of peaks is even in number, and wherein the frequency comb includes no peak at a centre frequency of the frequency comb.

4. The apparatus (20) of any of the preceding claims, wherein the peaks have a predetermined amplitude distribution, and:

    wherein each peak is approximately equal in amplitude; or
    wherein the amplitude distribution includes a power decay between adjacent peaks.

5. The apparatus (20) of any of the preceding claims, wherein the laser beam is a pulsed laser beam, and wherein the pulsed laser beam has a pulse duration of an order of $1/\Omega$ s.

6. The apparatus (20) of any of the preceding claims, wherein the laser beam is for driving atoms into the targeted quantum state with a higher fidelity than a fidelity achieved by a monochromatic laser beam, wherein the fidelity is defined as the maximum population transfer of atoms of the atom cloud (28) being driven into the targeted quantum state.

7. The apparatus (20) of any of the preceding claims, wherein the laser beam is for:

    robustly driving atoms into the targeted quantum state;
    driving atoms from the ground state into the excited state; and/or
    driving atoms from the excited state into the ground state.

8. The apparatus (20) of any of the preceding claims, wherein the atoms are arranged to be in the excited state, prior to being probed by the laser beam, and
wherein the laser beam is for driving the atoms, arranged in the excited state prior to being probed by the laser beam, into the targeted quantum state with a lower rate of spontaneous emission than a rate of spontaneous emission produced by a monochromatic laser beam.

9. The apparatus (20) of any of the preceding claims, wherein the modulator (24) comprises an acousto-optical modulator, AOM, and wherein the waveform generator (26) comprises an arbitrary waveform generator, AWG, configured to output a radio frequency, RF, signal for determining the frequency modulation of the modulator (24).

10. The apparatus (20) of any of the preceding claims, wherein the atom source comprises a cloud (28) of Rubidium 87 atoms, wherein the frequency spacing, $\delta\omega$, is of an order of magnitude of 100 kHz, wherein the pulse duration is of the order of $10^{-6}$ s, and wherein the laser beam is for driving atoms into the targeted quantum state with a fidelity equal to or greater than 0.8, and preferably equal to or greater than 0.95.

11. The apparatus (20) of any of claims 1 to 10, wherein the atom source comprises a cloud (28) of Strontium 87 atoms, and wherein the laser beam is for driving an atomic transition at 689 nm, wherein the frequency spacing, $\delta\omega$, is of an order of magnitude of 100 kHz, and the pulse duration is of an order of $10^{-6}$ s; or wherein the laser beam is for driving an atomic transition at 698 nm, wherein the frequency spacing, $\delta\omega$, is of an order of magnitude of 1 kHz, and the pulse duration is of an order of $100 \times 10^{-6}$ s.

12. The apparatus (20) of any of the preceding claims, wherein the frequency spacing, $\delta\omega$, is less than 1 MHz.

13. An atomic interferometer comprising the apparatus (20) of any of the preceding claims.

14. A gravity sensor comprising the apparatus (20) of any of the preceding claims.

15. A method for driving atoms of an atom cloud (28) into a targeted quantum state, the method comprising:

generating a laser beam to be directed onto an atom cloud (28) to be driven into a targeted quantum state, the laser beam having a frequency corresponding to a resonant frequency of an atomic transition for exciting the atoms into the targeted quantum state;
directing the laser beam through a modulator (24) configured to modulate the frequency of the laser beam responsive to an input signal;
generating an input signal input into the modulator (24) to cause the modulator (24) to modulate the laser light to generate a comb of frequencies around the resonant frequency of the atomic transition, the frequency comb including a plurality of peaks, **characterised by** each peak being separated by a frequency spacing that is determined based on a Rabi frequency of the atomic transition; and
probing an atom cloud (28) with the modulated laser beam for driving atoms of the atom cloud (28) into a targeted quantum state.

**Patentansprüche**

1. Vorrichtung (20) zum Treiben von Atomen einer Atomwolke (28) in einen targetierten Quantenzustand, wobei die Vorrichtung (20) Folgendes umfasst:

eine Atomquelle zum Freigeben einer Wolke von Atomen (28), die in einen targetierten Quantenzustand zu treiben ist;
ein Lasersystem (22), das konfiguriert ist, um einen Laserstrahl zu erzeugen, der auf die Atomwolke (28) in Verwendung zu richten ist, wobei der Laserstrahl eine Frequenz aufweist, die einer Resonanzfrequenz eines atomaren Übergangs entspricht, um die Atome in den targetierten Quantenzustand anzuregen;
einen Modulator (24), der konfiguriert ist, um in Verwendung die Frequenz des Laserstrahls als Reaktion auf ein Eingangssignal zu modulieren;
einen Wellenformgenerator (26), der an den Modulator (24) gekoppelt und konfiguriert ist, um in Verwendung ein Eingangssignal für den Modulator (24) zu erzeugen, wobei das Eingangssignal angeordnet ist, um zu bewirken, dass der Modulator (24) das Laserlicht moduliert, um einen Kamm von Frequenzen um die Resonanzfrequenz des atomaren Übergangs zu erzeugen, wobei der Frequenzkamm eine Vielzahl von Peaks beinhaltet, **dadurch gekennzeichnet, dass** jeder Peak durch einen Frequenzabstand, $\delta\omega$, getrennt ist, der basierend auf einer Rabi-Frequenz, $\Omega$, des atomaren Übergangs bestimmt ist, um Atome der Atomwolke (28) in einen targetierten Quantenzustand zu treiben.

2. Vorrichtung (20) nach Anspruch 1, wobei der Frequenzabstand, $\delta\omega$, als ungefähr ein ganzzahliges Vielfaches der Rabi-Frequenz, $\Omega$, assoziiert mit jedem einzelnen Peak bestimmt ist.

3.  Vorrichtung (20) nach Anspruch 1 oder Anspruch 2, wobei die Vielzahl von Peaks gerade in der Anzahl ist und wobei der Frequenzkamm keinen Peak bei einer Mittenfrequenz des Frequenzkamms beinhaltet.

4.  Vorrichtung (20) nach einem der vorhergehenden Ansprüche, wobei die Peaks eine vorbestimmte Amplitudenverteilung aufweisen, und:

    wobei jeder Peak ungefähr gleich in der Amplitude ist; oder
    wobei die Amplitudenverteilung einen Leistungsabfall zwischen benachbarten Peaks beinhaltet.

5.  Vorrichtung (20) nach einem der vorhergehenden Ansprüche, wobei der Laserstrahl ein gepulster Laserstrahl ist und wobei der gepulste Laserstrahl eine Impulsdauer in einer Größenordnung von $1/\Omega$ s aufweist.

6.  Vorrichtung (20) nach einem der vorhergehenden Ansprüche, wobei der Laserstrahl zum Treiben von Atomen in den targetierten Quantenzustand mit einer höheren Wiedergabetreue als einer Wiedergabetreue ist, die durch einen monochromatischen Laserstrahl erreicht wird, wobei die Wiedergabetreue als der maximale Populationstransfer von Atomen der Atomwolke (28) definiert ist, die in den targetierten Quantenzustand getrieben wird.

7.  Vorrichtung (20) nach einem der vorhergehenden Ansprüche, wobei der Laserstrahl für Folgendes ist:

    robustes Treiben von Atomen in den targetierten Quantenzustand;
    Treiben von Atomen aus dem Grundzustand in den angeregten Zustand; und/oder
    Treiben von Atomen aus dem angeregten Zustand in den Grundzustand.

8.  Vorrichtung (20) nach einem der vorhergehenden Ansprüche, wobei die Atome angeordnet sind, um in dem angeregten Zustand zu sein, bevor sie durch den Laserstrahl sondiert werden, und wobei der Laserstrahl zum Treiben der Atome, die in dem angeregten Zustand angeordnet sind, bevor sie durch den Laserstrahl sondiert werden, in den targetierten Quantenzustand mit einer geringeren Rate von spontaner Emission als einer Rate von spontaner Emission ist, die durch einen monochromatischen Laserstrahl produziert wird.

9.  Vorrichtung (20) nach einem der vorhergehenden Ansprüche, wobei der Modulator (24) einen akusto-optischen Modulator, AOM, umfasst, und wobei der Wellenformgenerator (26) einen willkürlichen Wellenformgenerator, AWG, umfasst, der konfiguriert ist, um ein Hochfrequenz-, HF-Signal zum Bestimmen der Frequenzmodulation des Modulators (24) auszugeben.

10. Vorrichtung (20) nach einem der vorhergehenden Ansprüche, wobei die Atomquelle eine Wolke (28) aus Rubidium-87-Atomen umfasst, wobei der Frequenzabstand, $\delta\omega$, in einer Größenordnung von 100 kHz ist, wobei die Impulsdauer in der Größenordnung von $10^{-6}$ s ist und wobei der Laserstrahl zum Treiben von Atomen in den targetierten Quantenzustand mit einer Wiedergabetreue gleich oder größer als 0,8 und bevorzugt gleich oder größer als 0,95 ist.

11. Vorrichtung (20) nach einem der Ansprüche 1 bis 10, wobei die Atomquelle eine Wolke (28) aus Strontium-87-Atomen umfasst und wobei der Laserstrahl zum Treiben eines atomaren Übergangs bei 689 nm ist, wobei der Frequenzabstand, $\delta\omega$, in einer Größenordnung von 100 kHz ist und die Impulsdauer in einer Größenordnung von $10^{-6}$ s ist; oder wobei der Laserstrahl zum Treiben eines atomaren Übergangs bei 698 nm ist, wobei der Frequenzabstand, $\delta\omega$, in einer Größenordnung von 1 kHz ist und die Impulsdauer in einer Größenordnung von $100 \times 10^{-6}$ s ist.

12. Vorrichtung (20) nach einem der vorhergehenden Ansprüche, wobei der Frequenzabstand, $\delta\omega$, weniger als 1 MHz ist.

13. Atomares Interferometer, das die Vorrichtung (20) nach einem der vorhergehenden Ansprüche umfasst.

14. Schwerkraftsensor, der die Vorrichtung (20) nach einem der vorhergehenden Ansprüche umfasst.

15. Verfahren zum Treiben von Atomen einer Atomwolke (28) in einen targetierten Quantenzustand, wobei das Verfahren Folgendes umfasst:

    Erzeugen eines Laserstrahls, der auf eine Atomwolke (28) zu richten ist, die in einen targetierten Quantenzustand zu treiben ist, wobei der Laserstrahl eine Frequenz aufweist, die einer Resonanzfrequenz eines atomaren Übergangs entspricht, um die Atome in den targetierten Quantenzustand anzuregen;

Leiten des Laserstrahls durch einen Modulator (24), der konfiguriert ist, um die Frequenz des Laserstrahls als Reaktion auf ein Eingangssignal zu modulieren;

Erzeugen eines Eingangssignals, das in den Modulator (24) eingegeben wird, um zu bewirken, dass der Modulator (24) das Laserlicht moduliert, um einen Kamm von Frequenzen um die Resonanzfrequenz des atomaren Übergangs zu erzeugen, wobei der Frequenzkamm eine Vielzahl von Peaks beinhaltet, **dadurch gekennzeichnet, dass** jeder Peak durch einen Frequenzabstand getrennt ist, der basierend auf einer Rabi-Frequenz des atomaren Übergangs bestimmt ist; und

Sondieren einer Atomwolke (28) mit dem modulierten Laserstrahl zum Treiben von Atomen der Atomwolke (28) in einen targetierten Quantenzustand.

**Revendications**

1. Appareil (20) pour entraîner les atomes d'un nuage d'atomes (28) dans un état quantique ciblé, l'appareil (20) comprenant :

   une source d'atomes pour libérer un nuage d'atomes (28) devant être entraîné dans un état quantique ciblé ;
   un système laser (22) configuré pour générer un faisceau laser devant être dirigé sur le nuage d'atomes (28) en cours d'utilisation, le faisceau laser comportant une fréquence correspondant à une fréquence de résonance d'une transition atomique pour exciter les atomes dans l'état quantique ciblé ;
   un modulateur (24) conçu pour, en cours d'utilisation, moduler la fréquence du faisceau laser en réponse à un signal d'entrée ;
   un générateur de forme d'onde (26) couplé au modulateur (24) et conçu pour, en cours d'utilisation, générer un signal d'entrée pour le modulateur (24), dans lequel le signal d'entrée est agencé pour amener le modulateur (24) à moduler la lumière laser pour générer un peigne de fréquences autour de la fréquence de résonance de la transition atomique, le peigne de fréquences comprenant une pluralité de pics, **caractérisé en ce que** chaque pic est séparé par un espacement de fréquences, $\delta\omega$, qui est déterminé sur la base d'une fréquence de Rabi, $\Omega$, de la transition atomique pour entraîner les atomes du nuage d'atomes (28) dans un état quantique ciblé.

2. Appareil (20) selon la revendication 1, dans lequel l'espacement de fréquence, $\delta\omega$, est déterminé comme étant approximativement un multiple entier de la fréquence de Rabi, $\Omega$, associée à chaque pic individuel.

3. Appareil (20) selon la revendication 1 ou la revendication 2, dans lequel la pluralité de pics est en nombre pair, et dans lequel le peigne de fréquence ne comprenant aucun pic au niveau d'une fréquence centrale du peigne de fréquence.

4. Appareil (20) selon l'une quelconque des revendications précédentes, dans lequel les pics ont une distribution d'amplitude prédéterminée, et :

   dans lequel chaque pic est approximativement égal en amplitude ; ou
   dans lequel la distribution d'amplitude comprend une décroissance de puissance entre des pics adjacents.

5. Appareil (20) selon l'une quelconque des revendications précédentes, dans lequel le faisceau laser est un faisceau laser pulsé, et dans lequel le faisceau laser pulsé a une durée d'impulsion de l'ordre de $1/\Omega$ s.

6. Appareil (20) selon l'une quelconque des revendications précédentes, dans lequel le faisceau laser est destiné à entraîner des atomes dans l'état quantique ciblé avec une fidélité supérieure à une fidélité obtenue par un faisceau laser monochromatique, dans lequel la fidélité est définie comme le transfert de population maximum d'atomes du nuage d'atomes (28) étant entraîné dans l'état quantique ciblé.

7. Appareil (20) selon l'une quelconque des revendications précédentes, dans lequel le faisceau laser est destiné à :

   l'entraînement robuste des atomes dans l'état quantique ciblé ;
   l'entraînement des atomes de l'état fondamental à l'état excité ; et/ou
   l'entraînement des atomes de l'état excité à l'état fondamental.

8. Appareil (20) selon l'une quelconque des revendications précédentes, dans lequel les atomes sont agencés pour être dans l'état excité, avant d'être sondés par le faisceau laser, et
dans lequel le faisceau laser est destiné à entraîner les atomes, agencés dans l'état excité avant d'être sondés par le faisceau laser, dans l'état quantique ciblé avec un taux d'émission spontanée inférieur à un taux d'émission spontanée produit par un faisceau laser monochromatique.

9. Appareil (20) selon l'une quelconque des revendications précédentes, dans lequel le modulateur (24) comprend un modulateur acousto-optique, AOM, et dans lequel le générateur de forme d'onde (26) comprend un générateur de forme d'onde arbitraire, AWG, conçu pour émettre en sortie un signal radiofréquence, RF, pour déterminer la modulation de fréquence du modulateur (24).

10. Appareil (20) selon l'une quelconque des revendications précédentes, dans lequel la source d'atomes comprend un nuage (28) d'atomes de Rubidium 87, dans lequel l'espacement de fréquence, $\delta\omega$, est d'un ordre de grandeur de 100 kHz, dans lequel la durée d'impulsion est de l'ordre de $10^{-6}$ s, et dans lequel le faisceau laser est destiné à entraîner des atomes dans l'état quantique ciblé avec une fidélité égale ou supérieure à 0,8, et de préférence égale ou supérieure à 0,95.

11. Appareil (20) selon l'une quelconque des revendications 1 à 10, dans lequel la source d'atomes comprend un nuage (28) d'atomes de Strontium 87, et dans lequel le faisceau laser est destiné à entraîner une transition atomique à 689 nm, dans lequel l'espacement de fréquence, $\delta\omega$, est d'un ordre de grandeur de 100 kHz, et la durée d'impulsion est de l'ordre de $10^{-6}$ s ; ou dans lequel le faisceau laser est destiné à entraîner une transition atomique à 698 nm, dans lequel l'espacement de fréquence, $\delta\omega$, est de l'ordre de grandeur de 1 kHz, et la durée d'impulsion est de l'ordre de $100 \times 10^{-6}$ s.

12. Appareil (20) selon l'une quelconque des revendications précédentes, dans lequel l'espacement de fréquence, $\delta\omega$, est inférieur à 1 MHz.

13. Interféromètre atomique comprenant l'appareil (20) selon l'une quelconque des revendications précédentes.

14. Capteur de gravité comprenant l'appareil (20) selon l'une quelconque des revendications précédentes.

15. Procédé permettant l'entraînement d'atomes d'un nuage d'atomes (28) dans un état quantique ciblé, le procédé comprenant :

la génération d'un faisceau laser devant être dirigé sur un nuage d'atomes (28) devant être entraîné dans un état quantique ciblé, le faisceau laser ayant une fréquence correspondant à une fréquence de résonance d'une transition atomique pour exciter les atomes dans l'état quantique ciblé ;
la direction du faisceau laser à travers un modulateur (24) conçu pour moduler la fréquence du faisceau laser en réponse à un signal d'entrée ;
la génération d'un signal d'entrée entré dans le modulateur (24) pour amener le modulateur (24) à moduler la lumière laser pour générer un peigne de fréquences autour de la fréquence de résonance de la transition atomique, le peigne de fréquences comprenant une pluralité de pics, **caractérisé en ce que** chaque pic est séparé par un espacement de fréquences qui est déterminé sur la base d'une fréquence de Rabi de la transition atomique ; et
le sondage d'un nuage d'atomes (28) avec le faisceau laser modulé pour entraîner les atomes du nuage d'atomes (28) dans un état quantique ciblé.

Fig. 1

Fig. 2

No spontaneous emission

Central Field: $P_i = 1$; $\sigma_{pos} = 1mm$; $\gamma = 0$

No Central Field: $\gamma = 0$

$P_{i+1} = 0.7P_i$; $\gamma = 0$

Spontaneous emission

Fig. 3a
$\gamma = 2\pi \times 7.4KHz$

Fig. 3b
$\gamma = 2\pi \times 7.4KHz$

Fig. 3c
$\gamma = 2\pi \times 7.4KHz$

Fig. 3d

Fig. 3e

Fig. 3f

Fig. 4

Single atom (mono) ($\gamma$=2$\pi$ x 74 kHz)

Single atom (poly-N=6, $P_f$=1, $\gamma$=2$\pi$ x 74 kHz)

Excited state fraction

Excited state fraction

t ($\mu$s)

t ($\mu$s)

Fig. 5a

Fig. 5b

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018073856 A
- US 2020395726 A
- CN 107328355 A